# EUROPÄISCHE PATENTSCHRIFT

(11) **EP 0 434 892 B1**
(45) Veröffentlichungstag und Bekanntmachung des Hinweises auf die Patenterteilung: **27.03.1996**
(21) Anmeldenummer: 90109994.5
(22) Anmeldetag: 25.05.1990
(51) Int. Cl.: D06Q 1/00

(54) **Verfahren zum Prägen von Textilien**
Process for the embossing of textiles
Procédé pour le gaufrage de matériaux textiles

(30) Priorität: 24.11.1989 DE 3938966
(43) Veröffentlichungstag der Anmeldung: 03.07.1991
(73) Patentinhaber: GISBERT WEISS GMBH, D-72461 Albstadt (DE)
(72) Erfinder: Weiss, Gisbert, D-7470 Albstadt 2 (DE); Weiss, Edith, D-7470 Albstadt 2 (DE)
(74) Vertreter: Grünecker, Kinkeldey, Stockmair & Schwanhäusser Anwaltssozietät

(56) Entgegenhaltungen:
- FR-A- 1 449 944
- FR-A- 2 437 935
- FR-A- 2 614 577

## Beschreibung

Die Erfindung betrifft ein Verfahren zum Prägen von Textilien oder Leder, bei dem eine Lage aus einem Textilmaterial oder Leder und eine Lage aus einem Schaumstoff zwischen zwei einander gegenüberliegenden Prägeflächen unter Wärmeeinwirkung gepreßt und miteinander verbunden werden, wobei zur Bildung eines eingeprägten Musters die Schaumstofflage in verschiedenen Flächenbereichen durch Zusammenpressen zwischen den Prägeflächen unterschiedlich verdichtet wird und das Verbinden der Textilmateriallage mit der Schaumstoff lage über eine zwischengelegte Kunststoffolie erfolgt.

Bei derartigen bekannten Verfahren zum Prägen von Textilien sind die einander gegenüberliegenden Flächen, zwischen denen das Textilmaterial zusammen mit dem Folienmaterial zum Prägen und Verbinden gepreßt wird, mit einer positiven und einer der positiven entsprechenden negativen Prägeform versehen. Durch die beim Prägen permanent verformte Folie wird zwar der Prägung eine gewisse Formbeständigkeit verliehen, diese ist jedoch unter den für Textilien typischen Beanspruchungen beim Waschen, Bügeln und Trocknen nicht ausreichend. Textilerzeugnisse, die nach den bisher bekannten Verfahren hergestellte Prägungen aufweisen, sind daher meist schon nach einmaliger Reinigung oder Wäsche unansehnlich, indem die Prägung nur noch andeutungsweise vorhanden und das eingeprägte Motiv nicht mehr oder nur noch teilweise erkennbar ist.

Ein Verfahren, bei dem eine verbesserte Formbeständigkeit der Prägung erreicht wird, ist aus der FR-A-2614577 bekannt. Bei diesem Verfahren werden eine Textilmateriallage und eine flexible Trägerlage unter Wärmeeinwirkung gepreßt und mit dem Textilmaterial verbunden. In die flexible, durch Druck und Wärme plastisch verformbare Trägerlage wird dabei ein formbeständiges Prägemuster eingedrückt. Die Trägerlage weist auf ihrer der Textilmateriallage zugewandten Seite eine Schaumstoffschicht auf.

Aus der FR-A-1449944 ist ein Verfahren der eingangs erwähnten Art zum Prägen von Textilien bekannt, bei dem eine Gewebebahn über eine zwischengelegte Kunststoffolie mit einer Trägerbahn aus einem Schaumstoff verbunden wird. Zur Verbindung und Prägung durchlaufen die Materialbahnen unter Wärmeeinwirkung einen Walzenspalt, wobei eine der Walzen auf ihrem Umfang mit einem Prägemuster versehen ist. Eine dauerhafte Prägung wird dadurch erreicht, daß das Kunststoffolienmaterial und der Schaumstoff unter der Wärmeeinwirkung aushärten.

Es ist die Aufgabe der vorliegenden Erfindung, ein gegenüber diesem Stand der Technik neues verbessertes Textilprägeverfahren zu schaffen.

Das diese Aufgabe lösende Verfahren nach der Erfindung ist dadurch gekennzeichnet, daß die Schmelztemperatur des beim Prägevorgang schmelzenden Kunststoffolienmaterials derart oberhalb der Schmelztemperatur des Schaumstoffmaterials gewählt wird, daß unter der Wärme- und Preßdruckeinwirkung geschmolzenes Schaumstoffmaterial die Textilmateriallage nicht zu tief durchdringt.

Durch diese erfindungsgemäße Lösung wird die Bindung zwischen der Textilmateriallage und der Schaumstofflage verbessert, so daß nach diesem Verfahren geprägte Textilmaterialien in hoher Qualität hergestellt werden können.

Durch die Kunststoffolie wird verhindert, daß das schon bei niedriger Temperatur schmelzende Schaumstoffmaterial zu tief in das Textilmaterial eindringt und zum Beispiel unter Beeinträchtigung der Ansehnlichkeit der Prägung bis zur gegenüberliegenden Oberfläche gelangen kann. Als eine solche Sperrfolie wird vorzugsweise eine Folie aus Polyethylen geringer Dichte eingesetzt.

Es erfolgt eine Prägung der Schaumstoffolie durch permanente Verdichtung des Schaumstoffmaterials entsprechend dem Prägemuster, wobei durch die Verbindung des geprägten Textilmaterials mit dem geprägten Schaumstoffmaterial eine hohe Formbeständigkeit, die insbesondere auch beim Reinigen, Waschen, Bügeln und Trocknen erhalten bleibt, erreicht wird.

In vorteilhafter Ausgestaltung der Erfindung erfolgt das Prägen unter der Bedingung, daß die beiden Prägeflächen als ebene Flächen ausgebildet sind und in der einen der beiden Flächen dem Prägemuster entsprechende Ausnehmungen vorgesehen sind. Dabei können die Ausnehmungen so tief vorgesehen sein, daß die Schaumstoffolie im Bereich der Ausnehmung nicht oder nur geringfügig verdichtet wird. Andererseits kann die Schaumstoffolie außerhalb der Ausnehmungen bis oder nahezu bis zur Aufhebung der Schaumstoffstruktur verdichtet sein. In diesem Fall bleibt das Textilmaterial im Bereich der Prägung verhältnismäßig flexibel, indem die Struktur der Schaumstoffolie nur in den vorstehenden Bereichen der Prägung erhalten geblieben ist.

Zweckmäßig umigbt den geprägten Bereich ein geschlossener Rand, in dem das Schaumstoffmaterial bis oder nahezu bis zur Aufhebung der Schaumstoffstruktur verdichtet ist. Da in den hochverdichteten Bereichen eine besonders feste Verbindung zwischen dem Textil- und dem Folienmaterial erreicht wird, ist dadurch gesichert, daß es vom Rand her nicht zu einer Ablösung des Folienmaterials vom Textilmaterial kommen kann.

Als Schaumstoffolienmaterial wird zweckmäßig ein leicht verformbarer Polyethylenschaum mit einer Dichte von 24 kg/m³ verwendet, wobei die Folie in den meisten Anwendungsfällen eine Dicke von ca. 2 mm aufweist.

Weitere vorteilhafte Ausgestaltungsmöglichkeiten der Erfindung gehen aus den Unteransprüchen hervor.

Das erfindungsgemäße Verfahren soll nun anhand eines Ausführungsbeispiels und der beiliegenden, dieses Ausführungsbeispiel betreffenden Zeichnungen weiter erläutert und beschrieben werden. Es zeigen:
- Fig.1: schematisch eine Anordnung zur Ausführung des erfindungsgemäßen Prägeverfahrens,
- Fig.2: den bei der Anordnung von Fig. 1 vorgesehenen Prägestempel mit einem Prägemuster,
- Fig.3: ein nach der Anordnung von Fig. 1 geprägtes Textilmaterialstück, und
- Fig.4: das Textilmaterialstück gemäß der Fig. 3 in einer Schnittdarstellung gemäß der Schnittlinie A-A von Fig. 3.

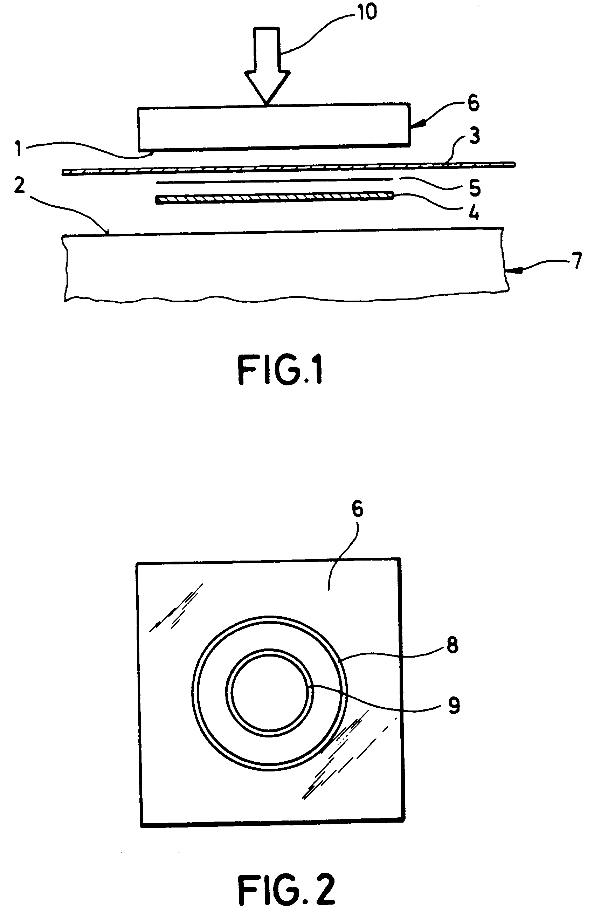

In der Fig. 1 ist mit dem Bezugszeichen 6 ein Prägestempel mit einer Prägefläche 1 und mit dem Bezugszeichen 7 eine Auflage mit einer Auflagefläche 2 bezeichnet. Die Auflagefläche 2 ist eine ebene Fläche, während die Fläche 1 des Prägestempels das in Fig. 2 gezeigte Prägemuster mit den kreisförmigen konzentrischen Rillen 8 und 9 aufweist. Zwischen der Fläche 1 und der Fläche 2 sind eine zu prägende Textilmateriallage 3, eine Schaumstoffolienlage 4 und zwischen der Textilmateriallage 3 und der Schaumstoffolienlage 4 eine weitere Lage aus einer Polyethylenfolie 5 angeordnet. Im vorliegenden Ausführungsbeispiel besteht die Schaumstoffolienlage aus Polyethylen und weist eine Dicke von 2 mm bei einer Materialdichte von 24 kg/m³ auf. Die Dicke der zwischen der Textilmateriallage 3 und der Schaumstoffolienlage 4 angeordneten Folie beträgt im vorliegenden Ausführungsbeispiel 25 µm und es handelt sich um Hochdruck-Polyethylen mit einer geringen Dichte von 0,918-0,93 gcm⁻³. Es hat sich herausgestellt, daß es zweckmäßig ist, Folien im Bereich von 25 bis 40 µm zu verwenden, wobei aber auch Folien bis zu einer Dicke von 100 µm einsetzbar sind. Je nach erwünschter Prägung können auch Schaumstoffolien mit Dicken und Dichten verwendet werden, die von den für das vorliegende Ausführungsbeispiel gewählten Werten nach oben oder unten abweichen. Die Dicke der Schaumstoffolie kann zwischen 1 und 3 mm liegen. Als zu prägendes Textilmaterial kommen Tricotagenmaterialien oder andere textile Materialien in Betracht.

Sowohl der vorzugsweise aus Aluminium gefertige Prägestempel 6 als auch die Auflage 7 werden durch in der Fig. 1 nicht dargestellte Einrichtungen beheizt.

Beim Prägen des Textilmaterials 3 wird der Prägestempel 6 in Richtung des Pfeils 10 nach unten gedrückt, wobei es unter der Wärmeeinwirkung entsprechend dem in der Fig. 2 gezeigten Prägemuster dazu kommt, daß das Schaumstoffolienmaterial in den Bereichen außerhalb der Rillen 8 und 9 unter Schmelzen des Schaumstoffmaterials soweit verdichtet wird, daß die Schaumstoffstruktur nahezu aufgehoben ist, während das Schaumstoffmaterial im Bereich der Rillen 8 und 9 in die Rillen hineinsteht, die im vorliegenden Ausführungsbeispiel so tief gewählt sind, daß das Schaumstoffmaterial im Bereich der Rillen kaum verdichtet wird. Durch die Wärmeeinwirkung kommt es zum Schmelzen der Folie 5, so daß unter Eindringen des geschmolzenen Kunststoffmaterials in das Textilmaterial eine Schmelzverbindung zwischen dem Textilmaterial und dem Schaumstoffmaterial hergestellt wird. Die verwendete Folie 5 sorgt dafür, daß das Schaumstoffmaterial, das bei niedrigerer Temperatur als das Material der Folie 5 schmilzt, nicht zu tief in das Textilmaterial eindringt und insbesondere nicht bis zur dem Prägestempel 6 zugewandten Oberfläche der Textilmateriallage 3 durch das Textilmaterial hindurchdringt. In den Bereichen der Rillen 8 und 9 schmilzt das Schaumstoffolienmaterial wenigstens an der Oberfläche, so daß es auch in diesen Bereichen zu einer Schmelzverbindung mit dem Textilmaterial kommt. Im vorliegenden Fall betrug die Schmelztemperatur des Schaumstoffmaterials 107,6°C und die der Folie 5 110,1^{o}C.

Der Preßdruck beim Prägen liegt vorzugsweise in einem Bereich zwischen 5 und 8 bar, wobei die Temperatur auf den Flächen 1 und 2 vorzugsweise im Bereich zwischen 140 und 180^{o}C und die Prägedauer im Bereich von 3 bis 5 Sekunden liegt.

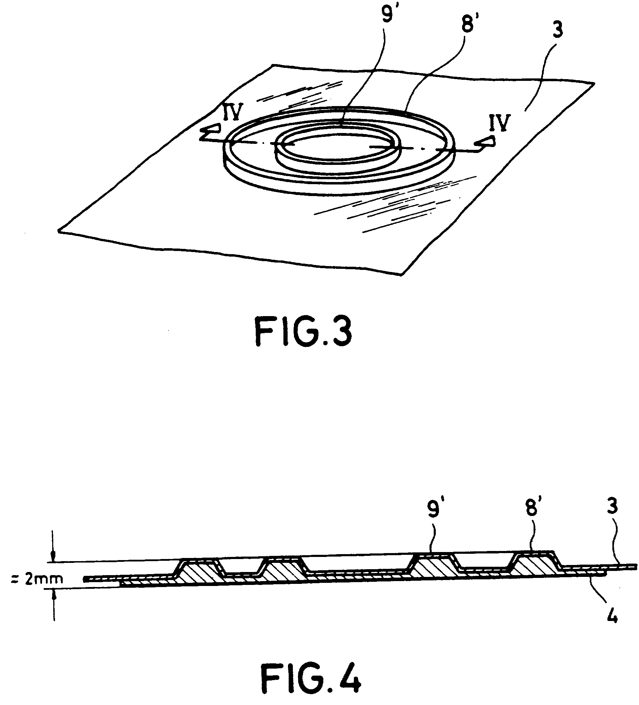

In der Fig. 3, die ein entsprechend der Anordnung gemäß der Fig. 1 und 2 geprägtes Textilmaterialstück zeigt, sind mit 8′ und 9′ den Rillen 8 und 9 des Prägestempels entsprechende vorstehende Prägebereiche in Form zweier konzentrischer Kreise bezeichnet. Aus der Fig. 4 geht hervor, daß das Schaumstoffmaterial im Bereich der Rillen bzw. der vorstehenden Ringe nur wenig verdichtet ist und die Ausgangsdicke von etwa 2 mm aufweist. Dagegen ist in den Bereichen außerhalb der Rillen das Material soweit verdichtet, daß die Schaumstoffstruktur nahezu aufgehoben ist. Die Folie 5 ist in der Fig. 4 nicht mit eingezeichnet, da sie beim Prägevorgang weitgehend schmilzt und sich mit der Oberfläche der Schaumstoffolie verbindet bzw. das geschmolzene Material in das Textilmaterial eindringt.

Anstelle der in den Fig. 3 und 4 dargestellten Prägung mit extrem wenig und extrem stark verdichteten Teilen der Schaumstoffolie sind auch Prägungen denkbar, bei denen im gesamten Prägebereich eine Verdichtung des Schaumstoffolienmaterials erfolgt, aber die maximale Verdichtung zum Beispiel nur bis zu einer Verringerung der Foliendicke auf ein Drittel erfolgt.

Anstelle der verwendeten plattenförmigen Prägewerkzeuge könnten auch Prägewalzen eingesetzt werden.

Mit dem erfindungsgemäßen Verfahren lassen sich Textilien mit Prägungen herstellen, wobei die Prägungen unter den für Textilien typischen Beanspruchungen beim Waschen, Bügeln und Trocknen ihre Formbeständigkeit bewahren.

Das beschriebene Prägeverfahren für Textilien kann auch zum Prägen von Leder, einschließlich künstlichem Leder, und insbesondere zum Prägen von dünnem Leder eingesetzt werden.

## Patentansprüche

1. Verfahren zum Prägen von Textilien oder Leder, bei dem eine Lage (3) aus einem Textilmaterial oder Leder und eine Lage (4) aus einem Schaumstoff zwischen zwei einander gegenüberliegenden Prägeflächen (1, 2) unter Wärmeeinwirkung gepreßt und miteinander verbunden werden, wobei zur Bildung eines eingeprägten Musters die Schaumstofflage (4) in verschiedenen Flächenbereichen durch Zusammenpressen zwischen den Prägeflächen unterschiedlich verdichtet wird und das Verbinden der Textilmateriallage (3) mit der Schaumstoff lage (4) über eine zwischengelegte Kunststoffolie (5) erfolgt, **dadurch gekennzeichnet,** daß die Schmelztemperatur des beim Prägevorgang schmelzenden Kunststoffolienmaterials derart oberhalb der Schmelztemperatur des Schaumstoffmaterials gewählt wird, daß unter der Wärme- und Preßdruckeinwirkung geschmolzenes Schaumstoffmaterial die Textilmateriallage nicht zu tief durchdringt.

2. Verfahren nach Anspruch 1, **dadurch gekennzeichnet**, daß die Kunststoffolie eine Polyethylenfolie (5) ist.

3. Verfahren nach Anspruch 1 oder 2, **dadurch gekennzeichnet**, daß die Kunststoffolie (5) eine Dicke von 25 bis 40 µm aufweist.

4. Verfahren nach einem der Ansprüche 1 bis 3, **dadurch gekennzeichnet**, daß die beiden Prägeflächen (1, 2) als ebene Flächen ausgebildet und in einer der beiden Flächen dem Prägemuster entsprechende Ausnehmungen (10, 11) vorgesehen sind.

5. Verfahren nach Anspruch 4, **dadurch gekennzeichnet**, daß die Schaumstofflage (4) in Bereichen der Ausnehmungen nicht oder nur geringfügig verdichtet wird.

6. Verfahren nach Anspruch 4 oder 5, **dadurch gekennzeichnet**, daß die Schaumstofflage (4) in Bereichen außerhalb der Ausnehmungen (10, 11) unter Schmelzen des Schaumstoffmaterials bis oder nahezu bis zur Aufhebung der Schaumstoffstruktur verdichtet wird.

7. Verfahren nach Anspruch 6, **dadurch gekennzeichnet**, daß ein Prägungsbereich mit einem geschlossenen Rand, in dem das Schaumstoffmaterial bis oder nahezu bis zur Aufhebung der Schaumstoffstruktur verdichtet ist, vorgesehen ist.

8. Verfahren nach einem der Ansprüche 1 bis 7, **dadurch gekennzeichnet**, daß die Schaumstoff lage aus einer Polyethylenschaumfolie besteht.

9. Verfahren nach einem der Ansprüche 1 bis 8, **dadurch gekennzeichnet**, daß die Schaumstoff lage eine Dicke im Bereich von 1 bis 3 mm aufweist.

10. Verfahren nach einem der Ansprüche 1 bis 9, **dadurch gekennzeichnet,** daß die Schaumstofflage eine Dichte von 24 kg/m³ aufweist.

11. Verfahren nach einem der Ansprüche 1 bis 10, **dadurch gekennzeichnet**, daß der Preßdruck beim Prägen im Bereich von 5 bis 8 bar liegt.

12. Verfahren nach einem der Ansprüche 1 bis 11, **dadurch gekennzeichnet**, daß der Prägevorgang bei einer Temperatur im Bereich von 140 bis 180°C durchgeführt wird.

13. Verfahren nach einem der Ansprüche 1 bis 12, **dadurch gekennzeichnet,** daß die Prägedauer zwischen 3 und 15 Sekunden liegt.

14. Verfahren nach einem der Ansprüche 8 bis 13, **dadurch gekennzeichnet,** daß der Schmelzpunkt der Polyethylenschaumfolie (4) um etwa 2 K unter dem Schmelzpunkt der Polyethylenfolie (5) liegt.

## Claims

1. Method for embossing textiles or leather, in which a layer (3) of a textile material or leather and a layer (4) of a foamed material are pressed and joined together, under the action of heat, between two opposing embossing surfaces (1, 2), whereby, for the purpose of forming an embossed pattern, the layer of foamed material (4) is compressed differently in different surface areas by being pressed between the embossing surfaces and the layer of textile material (3) is joined to the layer of foamed material (4) through an intermediate plastics film (5), characterized in that the melting temperature of the plastics film material, which melts during the stamping operation, is selected so as to be greater than the melting temperature of the foamed material so that molten foamed material does not penetrate the layer of textile material too deeply under the action of heat and compression.

2. Method according to Claim 1, characterized in that the plastics film is a polyethylene film (5).

3. Method according to Claim 1 or 2, characterized in that the plastics film (5) is 25 to 40 µm in thickness.

4. Method according to any one of Claims 1 to 3, characterized in that the two embossing surfaces (1, 2) are formed as planar surfaces and there are recesses (10, 11), corresponding to the embossing pattern, in one of the two surfaces.

5. Method according to Claim 4, characterized in that the layer of foamed material (4) is not compressed, or is only slightly compressed, in areas of the recesses.

6. Method according to Claim 4 or 5, characterized in that the layer of foamed material (4) is compressed in areas outside the recesses (10, 11) by melting of the foamed material, to the extent, or almost to the extent, that the structure of the foamed material is nullified.

7. Method according to Claim 6, characterized in that there is an embossing area with a closed edge in which the foamed material is compressed to the extent, or almost to the extent, that the structure of the foamed material is nullified.

8. Method according to any one of Claims 1 to 7, characterized in that the layer of foamed material consists of a film of polyethylene foam.

9. Method according to any one of Claims 1 to 8, characterized in that the layer of foamed material has a thickness within the range of 1 to 3 mm.

10. Method according to any one of Claims 1 to 9, characterized in that the layer of foamed material has a density of 24 kg/m³.

11. Method according to any one of Claims 1 to 10, characterized in that the pressing pressure during embossing is within the range of 5 to 8 bar.

12. Method according to any one of Claims 1 to 11, characterized in that the embossing operation is performed at a temperature within the range of 140 to 180 °C.

13. Method according to any one of Claims 1 to 12, characterized in that the embossing operation has a duration of between 3 and 15 seconds.

14. Method according to any one of Claims 8 to 13, characterized in that the melting point of the polyethylene foam film (4) is about 2 K below the melting point of the polyethylene film (5).

## Revendications

1. Procédé pour le gaufrage de matériaux textiles ou de cuir, dans lequel une couche (3) en un matériau textile ou de cuir et une couche (4) de matière alvéolaire sont comprimées et liées l'une à l'autre par un effet thermique entre deux surfaces de gaufrage (1, 2) placées face à face, la couche de matériau alvéolaire (4) étant différemment compactée dans différentes zones de sa surface, par pressage entre les surfaces de gaufrage, pour la formation d'un motif imprimé et la liaison de la couche de matériau textile (3) avec la couche de matière alvéolaire (4) étant obtenue par une couche de matière synthétique (5) intercalée, caractérisé en ce que la température de fusion de la feuille de matière synthétique en fusion pendant le processus de gaufrage est choisie suffisamment supérieure à la température de fusion de la matière alvéolaire, pour que de la matière alvéolaire fondue ne s'incruste pas trop profondément dans le matériau textile sous l'effet de la chaleur et de la puissance de la compression.

2. Procédé selon la revendication 1, caractérisé en ce que la feuille de matière synthétique est une feuille de polyéthylène (5).

3. Procédé selon la revendication 1 ou 2, caractérisé en ce que la feuille de matière synthétique (5) présente une épaisseur comprise entre 25 et 40 µm.

4. Procédé selon l'une des revendications 1 à 3, caractérisé en ce que les deux surfaces de gaufrage (1, 2) sont des surfaces planes et des évidements (10, 11) correspondant au motif de gaufrage sont prévus dans l'une des deux surfaces.

5. Procédé selon la revendication 4, caractérisé en ce que la couche de matière alvéolaire (4) n'est pas ou seulement faiblement compactée dans les zones des évidements.

6. Procédé selon la revendication 4 ou 5, caractérisé en ce que la couche de matière alvéolaire (4) est compactée, dans des zones en dehors des évidements (10, 11) par fusion de la matière alvéolaire, jusqu'à ou pratiquement jusqu'à supprimer la structure de la matière alvéolaire.

7. Procédé selon la revendication 6, caractérisé en ce qu'il est prévu une zone de gaufrage avec un bord fermé, dans laquelle la matière alvéolaire est compactée jusqu'à ou pratiquement jusqu'à supprimer la structure de la matière alvéolaire.

8. Procédé selon l'une des revendications 1 à 7, caractérisé en ce que la couche de matière alvéolaire est constituée par une feuille de mousse polyéthylène.

9. Procédé selon l'une des revendications 1 à 8, caractérisé en ce que la couche de matière alvéolaire présente une épaisseur comprise entre 1 et 3 mm.

10. Procédé selon l'une des revendications 1 à 9, caractérisé en ce que la couche de matière alvéolaire présente une densité de 24 kg/m³.

11. Procédé selon l'une des revendications 1 à 10, caractérisé en ce que la compression pendant le gaufrage se situe dans la gamme de 5 à 8 bars.

12. Procédé selon l'une des revendications 1 à 11, caractérisé en ce que le processus de gaufrage est exécuté à une température dans la gamme de 140 à 180°C.

13. Procédé selon l'une des revendications 1 à 12, caractérisé en ce que la durée du processus de gaufrage est comprise entre 3 et 15 secondes.

14. Procédé selon l'une des revendications 8 à 13, caractérisé en ce que le point de fusion de la feuille de mousse polyéthylène (4) est inférieure de 2 K environ au point de fusion de la feuille de polyéthylène (5).
